# EUROPÄISCHE PATENTSCHRIFT

(11) **EP 2 200 942 B1**
(45) Veröffentlichungstag und Bekanntmachung des Hinweises auf die Patenterteilung: **06.04.2011**
(21) Anmeldenummer: 08802799.0
(22) Anmeldetag: 07.10.2008
(51) Int. Cl.: C01G 23/07

(54) **MEHRSTUFIGES VERFAHREN ZUR HERSTELLUNG VON TITANDIOXID**
MULTI-STEP METHOD FOR PRODUCING TITANIUM DIOXIDE
PROCÉDÉ DE PRODUCTION DE DIOXYDE DE TITANE EN PLUSIEURS ÉTAPES

(30) Priorität: 12.10.2007 DE 102007049296
(43) Veröffentlichungstag der Anmeldung: 30.06.2010
(73) Patentinhaber: KRONOS INTERNATIONAL, INC., 51307 Leverkusen (DE)
(72) Erfinder: GRUBER, Rainer, 51379 Leverkusen (DE)
(86) Internationale Anmeldenummer: PCT/EP2008/008430
(87) Internationale Veröffentlichungsnummer: WO 2009/049786

(56) Entgegenhaltungen:
- WO-A-01/60748
- WO-A-2007/050682
- WO-A-2008/036534
- US-A- 5 840 112

## Beschreibung

### Gebiet der Erfindung

Die Erfindung betrifft die Herstellung von Titandioxid durch Oxidation von Titantetrachlorid in einem mehrstufigen Verfahren, wobei sowohl Sauerstoff wie Titantetrachlorid in mehreren Stufen dosiert werden.

### Technologischer Hintergrund der Erfindung

In einem der kommerziell angewendeten Verfahren zur Herstellung von Titandioxid-Pigmentpartikeln, dem sogenannten Chloridverfahren, wird Titantetrachlorid (TiCl₄) mit einem oxidierenden Gas wie Sauerstoff, Luft etc. sowie mit bestimmten Additiven in einem Rohrreaktor zu Titandioxid und Chlorgas umgesetzt:

TiCl₄ + O₂ → TiO₂ + 2 Cl₂

Die TiO₂-Partikel werden anschließend von dem Chlorgas abgetrennt. Als Additive sind AlCl₃ als Rutilisierer sowie Wasserdampf oder Alkalisalze als Keimbildner bekannt.

Üblicherweise wird der Oxidationsprozess einstufig durchgeführt, d.h. die Reaktionskomponenten (Edukte) Sauerstoff und gasförmiges Titantetrachlorid werden jeweils an nur einer Stelle des Reaktors zudosiert. Aufgrund der hohen Aktivierungsenergie der Oxidation von TiCl₄ müssen die Edukte vor der Dosierung so weit erhitzt werden, dass eine adiabate Mischtemperatur von mindestens ca. 740 °C erreicht wird. Die Oxidationsreaktion ist stark exotherm, so dass nach vollständigem Umsatz eine adiabate Reaktionstemperatur von ca. 1850 °C erreicht wird. Bis zur Abtrennung des entstandenen Pigments aus dem Gasgemisch in einem Filter ist dieses Gemisch auf höchstens 450 °C abzukühlen, um Schäden am Filter zu vermeiden. Energetisch ist diese Prozessführung unbefriedigend, da große Wärmemengen in das Kühlwassersystem dissipiert werden. Auch hinsichtlich der Produktqualität ist die einstufige Oxidation nachteilig, da die ausgedehnte Heißzone der Oxidation die Bildung harter TiO₂-Aggregate fördert.

So gibt es im Stand der Technik verschiedene Entwicklungen, den Prozess mehrstufig zu betreiben. Gemäß GB 1 064 569 werden sowohl TiCl₄ wie O₂ in zwei Stufen dosiert, wobei die jeweilige O₂-Menge ausreicht, die jeweilige Menge TiCl₄ vollständig zu oxidieren.

Die Lehre gemäß US 4,053,577 sieht vor, dass maximal eines der Edukte in zwei Stufen in den Reaktor eingeleitet wird.

In den Verfahren gemäß GB 2 037 266, US 4,803,056 und EP 0 583 063 B1 wird gasförmiges TiCl₄ in zwei oder mehr Stufen in einen heißen Sauerstoffstrom eingeleitet.

Das Verfahren gemäß EP 0 852 568 B1 sieht vor, neben TiCl₄ auch den Sauerstoff zweistufig zu dosieren. Zielsetzung dieses Verfahrens ist jedoch die wirksame Kontrolle der mittleren TiO₂-Partikelgröße und damit des Farbstichs des TiO₂-Pigmentgrundkörpers. Hier wird in einen etwa 950 °C heißen Sauerstoffstrom zunächst etwa 400 °C heißer TiCl₄-Dampf geleitet. In der nachfolgenden Reaktionszone bilden sich die TiO₂-Partikel und findet das Partikelwachstum statt. An einem zweiten Einlasspunkt wird weniger stark erwärmter TiCl₄-Dampf (ca. 180 °C) zugeführt. Sauerstoff wird an dem zweiten Einlasspunkt mit einer Temperatur zwischen 25 und 1040 °C eingeleitet, wobei die Temperatur der Mischung ausreichend ist, um die Reaktion einzuleiten.

Das mehrstufige Verfahren gemäß US 6,387,347 soll zusätzlich die Agglomeratbildung reduzieren. Hierzu wird der bereits erhitzte gasförmige TiCl₄-Strom vor der Dosierung in den Reaktor in zwei Teilströme aufgeteilt. Ein Teilstrom wird in der ersten Stufe des Reaktors oxidiert. Der zweite Teilstrom wird durch Einsprühen von flüssigem TiCl₄ abgekühlt (De-Superheating) und anschließend in den Reaktor dosiert. Das De-Superheating findet außerhalb des Reaktors statt, wobei die Kondensationstemperatur des Gesamtstroms nicht unterschritten wird.

Die US 2007/0172414 A1 offenbart ein mehrstufiges Verfahren zur Reaktion von TiCl₄ und O₂, bei dem in der ersten Stufe gasförmiges TiCl₄ und in der zweiten Stufe flüssiges TiCl₄ in den Reaktor eingeleitet wird und wobei der Sauerstoff in der ersten Reaktionsstufe überstöchiometrisch vorhanden ist. Dieses Verfahren ermöglicht Energieeinsparungen und eine Verbesserung des Partikelgrößenspektrums.

### Aufgabenstellung und Kurzfassung der Erfindung

Die Aufgabe der vorliegenden Erfindung bestand darin, ein Verfahren zur Herstellung von Titandioxid durch Oxidation von Titantetrachlorid zu schaffen, das gegenüber den aus dem Stand der Technik bekannten Verfahren weitere Energieeinsparungen ermöglicht.

Die Lösung der Aufgabe besteht in einem mehrstufigen Verfahren zur Herstellung von Titandioxid durch Reaktion von Titantetrachlorid mit Sauerstoff in einem Reaktor gekennzeichnet durch folgende Schritte:
a) Einleiten von gasförmigem TiCl₄ in einen vorerhitzten sauerstoffhaltigen Strom in einer ersten Reaktionszone des Reaktors, wobei das Molverhältnis TiCl₄ : O₂ in der Reaktionszone mindestens 1 beträgt und sich eine TiO₂-enthaltende Gassuspension bildet,
b) Weiterleiten der TiO₂-enthaltenden Gassuspension in mindestens eine weitere Reaktionszone,
c) Einleiten eines sauerstoffhaltigen Gases und flüssigen TiCl₄ in die mindestens eine weitere Reaktionszone und weitere Bildung von TiO₂ in der Gassuspension, wobei das sauerstoffhaltige Gas vor der Reaktion eine Temperatur von weniger als 50°C aufweist.

Weitere vorteilhafte Ausformungen der Erfindung sind in den Unteransprüchen beschrieben.

### Beschreibung der Erfindung

Das erfindungsgemäße Verfahren unterscheidet sich von den genannten mehrstufigen Chloridverfahren zur Herstellung von Titandioxid aus dem Stand der Technik dadurch, dass das TiCl₄ in der ersten Stufe (Schritt a)) gasförmig und gegenüber dem Sauerstoff stöchiometrisch oder im Überschuss und in der zweiten und in den gegebenenfalls weiteren Stufen (Schritt c)) flüssig und unterstöchiometrisch dosiert wird.

In Schritt a) reagieren TiCl₄ und O₂ in einer ersten Reaktionszone des Reaktors und bilden eine TiO₂-enthaltende Gassuspension (erste Stufe).

In Schritt b) wird die TiO₂-enthaltende Gassuspension in mindestens eine weitere Reaktionszone weitergeleitet.

In Schritt c) wird in die mindestens eine weitere Reaktionszone sauerstoffhaltiges Gas und flüssiges TiCl₄ eingeleitet und weiteres TiO₂ in der Gassuspension gebildet (zweite Stufe).

Das Verfahren kann zweistufig oder in mehr als zwei Stufen geführt werden. In der ersten Stufe (Schritt a)) beträgt die Temperatur des vorerhitzten sauerstoffhaltigen Gases mindestens etwa 950 °C.

In das erfindungsgemäße Verfahren wird das sauerstoffhaltige Gas in der mindestens einen weiteren Stufe "kalt", d.h. mit einer Temperatur von weniger als etwa 50 °C eingeleitet, beispielsweise mit einer Temperatur von etwa 30°C. Diese Verfahrensweise führt zu einer weiter verbesserten Energieeffizienz, da nur der Anteil des sauerstoffhaltigen Gases der ersten Stufe erhitzt werden muss, um die Aktivierungsenergie für die Reaktion bereitzustellen. In allen weiteren Stufen wird die Aktivierungsenergie durch die in den vorgeschalteten Stufen freigesetzte Reaktionsenthalpie der Oxidation von TiCl₄ bereitgestellt.

In einer weiteren Ausführung des Verfahrens wird in Schritt a) das gasförmige TiCl₄ in Mischung mit sauerstoffhaltigem Gas in den Reaktor eingeleitet. Es ist vorteilhaft, wenn der O₂-Anteil in der Gasmischung maximal etwa 20 Vol.-% beträgt. Um eine verfrühte Reaktion der Komponenten in der Gasmischung zu vermeiden, sollte die Temperatur der Gasmischung maximal 900 °C betragen. Die Einleitung von gasförmigem TiCl₄ in Mischung mit sauerstoffhaltigem Gas beugt der Bildung von Defekten in der TiO₂-Struktur vor und führt zu einer verbesserten Helligkeit des hergestellten TiO₂-Pigments.

In einer besonderen Ausführung der Erfindung wird das Verfahren in einem zylindrischen Rohrreaktor durchgeführt.

### Beispielhafte Ausführung des Verfahrens

Die nachfolgend beschriebene Ausführungsform stellt nur eine mögliche Ausformung der Erfindung dar und ist nicht als Beschränkung der Erfindung zu verstehen.

Das Verfahren wird in zwei Stufen geführt, wobei das TiCl₄ in gleichen Mengen in der ersten und der zweiten Stufen dosiert wird. In der ersten Stufe beträgt die Temperatur des sauerstoffhaltigen Stroms 1650°C und die des eingeleiteten gasförmigen TiCl₄ 450°C. Das Molverhältnis TiCl₄ : O₂ in der ersten Reaktionszone beträgt etwa 1. Stromabwärts von der ersten Stufe an einer Stelle, wo die Reaktion der ersten Stufe vollständig abgelaufen ist, wird zuerst ein sauerstoffhaltiges Gas und dann flüssiges TiCl₄ dosiert. In der zweiten Stufe beträgt die Temperatur des eingeleiteten sauerstoffhaltigen Gases 30°C und die des eingeleiteten flüssigen TiCl₄ ebenfalls 30°C.

Gegenüber der üblichen einstufigen Verfahrensweise werden bei dieser Ausformung der erfindungsgemäßen Verfahrensweise zwar die gleichen Temperaturen in der ersten Verbrennungsstufe gewählt, es ergeben sich aber durch die deutlich geringeren zu erhitzenden Mengen des sauerstoffhaltigen Gases und des TiCl₄ in der ersten Stufe eine erhebliche Energieeinsparung bei der Vorerhitzung der Edukte. In der zweiten Stufe müssen die Edukte dagegen nicht vorerhitzt werden. Die insgesamt erzielte Einsparung entspricht in etwa dem Aufteilungsverhältnis des TiCl₄ auf die beiden Stufen, also im vorliegenden Beispiel etwa 50%.

Da die beschriebene Ausführungsform nur eine mögliche Ausformung der Erfindung darstellt, umfasst das erfindungsgemäße Verfahren optional auch die dem Fachmann bekannte Dosierung von Additiven zur Rutilisierung (z.B. AlCl₃) und zur Keimbildung (z.B. Alkalisalze) in die Reaktionszone.

## Patentansprüche

1. Mehrstufiges Verfahren zur Herstellung von Titandioxid durch Reaktion von Titantetrachlorid mit Sauerstoff in einem Reaktor **gekennzeichnet durch** folgende Schritte:
a) Einleiten von gasförmigem TiCl₄ in einen vorerhitzten sauerstoffhaltigen Strom in einer ersten Reaktionszone des Reaktors, wobei das Molverhältnis TiCl₄ : O₂ in der Reaktionszone mindestens 1 beträgt und sich eine TiO₂-Partikel enthaltende Gassuspension bildet,
b) Weiterleiten der TiO₂-Partikel enthaltenden Gassuspension in mindestens eine weitere Reaktionszone,
c) Einleiten eines sauerstoffhaltigen Gases und flüssigen TiCl₄ in die mindestens eine weitere Reaktionszone und weitere Bildung von TiO₂ in der Gassuspension, wobei das sauerstoffhaltige Gas vor der Reaktion eine Temperatur von weniger als 50°C aufweist.

2. Verfahren nach Anspruch 1 **dadurch gekennzeichnet,**
**dass** in Schritt c) zuerst Sauerstoff und anschließend TiCl₄ eingeleitet wird.

3. Verfahren nach Anspruch 1 oder 2 **dadurch gekennzeichnet,**
**dass** die Temperatur des sauerstoffhaltigen Gases in Schritt a) vor der Reaktion mindestens etwa 950 °C beträgt.

4. Verfahren nach Anspruch 1 **dadurch gekennzeichnet,**
**dass** sich die weitere Reaktionszone in dem Reaktor dort befindet, wo die Reaktion gemäß Schritt a) vollständig abgelaufen ist.

5. Verfahren nach Anspruch 1 oder 2 **dadurch gekennzeichnet,**
**dass** in Schritt a) das gasförmige TiCl₄ in Mischung mit Sauerstoff eingeleitet wird.

6. Verfahren nach Anspruch 5 **dadurch gekennzeichnet,**
**dass** in Schritt a) der O₂-Anteil in der Gasmischung maximal etwa 20 Vol.-% beträgt.

7. Verfahren nach Anspruch 5 oder 6 **dadurch gekennzeichnet,**
**dass** die Temperatur der Gasmischung maximal etwa 900 °C beträgt.

## Claims

1. Multi-stage method for manufacturing titanium dioxide by reacting titanium tetrachloride with oxygen in a reactor, **characterised by** the following steps:
a) Introduction of gaseous TiCl₄ into a preheated, oxygen-containing stream in a first reaction zone of the reactor, where the molar ratio of TiCl₄ O₂ in the reaction zone is at least 1 and a gas suspension containing TiO₂ particles is formed,
b) Passing of the gas suspension containing TiO₂ particles into at least one further reaction zone,
c) Introduction of an oxygen-containing gas and liquid TiCl₄ into the at least one further reaction zone and further formation of TiO₂ in the gas suspension, where the oxygen-containing gas displays a temperature of less than 50 °C before the reaction.

2. Method according to Claim 1, **characterised in that**
oxygen is introduced first in Step c), followed by TiCl₄.

3. Method according to Claim 1 or 2, **characterised in that**
the temperature of the oxygen-containing gas in Step a) is at least approximately 950 °C before the reaction.

4. Method according to Claim 1, **characterised in that**
the further reaction zone is located at a point in the reactor where the reaction according to Step a) has been completed.

5. Method according to Claim 1 or 2, **characterised in that**
the gaseous TiCl₄ is introduced in a mixture with oxygen in Step a).

6. Method according to Claim 5, **characterised in that**
the O₂ content of the gas mixture in Step a) is a maximum of approximately 20% by volume.

7. Method according to Claim 5 or 6, **characterised in that**
the temperature of the gas mixture is a maximum of approximately 900 °C.

## Revendications

1. Procédé à étapes multiples de production de dioxyde de titane par réaction de tétrachlorure de titane avec de l'oxygène dans un réacteur, **caractérisé par** les étapes suivantes :
a) introduction de TiCl₄ sous forme gazeuse, dans un courant préchauffé contenant de l'oxygène dans une première zone réactionnelle du réacteur, le rapport molaire de TiCO₄ : O₂ dans la zone réactionnelle étant d'au moins 1 et une suspension gazeuse contenant des particules de TiO₂ se formant,
b) acheminement de la suspension gazeuse contenant des particules de TiO₂ dans au moins une autre zone réactionnelle,
c) introduction d'un gaz contenant de l'oxygène et de TiCl₄ liquide dans au moins l'autre zone réactionnelle et nouvelle formation de TiO₂ dans la suspension gazeuse, le gaz contenant de l'oxygène présentant avant la réaction, une température inférieure à 50° C.

2. Procédé selon la revendication 1, **caractérisé en ce que** à l'étape c), on introduit tout d'abord de l'oxygène et ensuite, du TiCl₄.

3. Procédé selon la revendication 1 ou 2, **caractérisé en ce que** la température du gaz contenant de l'oxygène à l'étape a) est d'au moins environ 950° C avant la réaction.

4. Procédé selon la revendication 1, **caractérisé en ce que** l'autre zone réactionnelle se trouve dans le réacteur dans lequel la réaction se déroule complètement selon la revendication a).

5. Procédé selon la revendication 1 ou 2, **caractérisé en ce que** à l'étape a), le TiCl₄ sous forme gazeuse est introduit en mélange avec de l'oxygène.

6. Procédé selon la revendication 5, **caractérisé en ce que**, à l'étape a), la proportion de O₂ dans le mélange gazeux est au maximum d'environ 20 % en vol.

7. Procédé selon la revendication 5 ou 6, **caractérisé en ce que** la température du mélange gazeux est au maximum d'environ 900° C.
